# EUROPÄISCHE PATENTSCHRIFT

(11) **EP 2 233 381 B1**
(45) Veröffentlichungstag und Bekanntmachung des Hinweises auf die Patenterteilung: **12.03.2014**
(21) Anmeldenummer: 10003242.4
(22) Anmeldetag: 26.03.2010
(51) Int. Cl.: B62D 3/12, F16H 55/28, F16H 57/022

(54) **Kostengünstiges Zahnstangenlenkgetriebe**
Cost-effective gear rack steering gear
Direction à crémaillère économique

(30) Priorität: 27.03.2009 DE 102009014671
(43) Veröffentlichungstag der Anmeldung: 29.09.2010
(73) Patentinhaber: ThyssenKrupp Presta AG, 9492 Eschen (LI)
(72) Erfinder: Birkwald, Frank, 73760 Ostfildern (DE)
(74) Vertreter: Lenzing Gerber Stute

(56) Entgegenhaltungen:
- EP-A1- 1 046 569
- EP-A1- 1 738 989
- WO-A1-2004/067357
- GB-A- 655 130
- JP-A- 8 301 129
- JP-A- 2000 233 759
- US-A1- 2007 137 375

## Beschreibung

Die vorliegende Erfindung betrifft ein Lenkgetriebe in der Bauform einer Zahnstangenlenkung mit den Merkmalen des Oberbegriffs des Anspruchs 1.

Im Automobilbau werden derzeit zum weit überwiegenden Teil Zahnstangelenkungen als Lenkgetriebe eingesetzt. Dies gilt sowohl für hydraulisch oder elektrisch servounterstützte Lenkungen als auch für nicht servounterstützte Lenkungen. Diese Lenkgetriebe weisen im Allgemeinen ein Lenkungsgehäuse mit einer darin in Längsrichtung verschieblich gelagerten Zahnstange auf. Ein Lenkritzel ist drehbar in einem Ritzelgehäuse angeordnet und greift in eine kompatible Verzahnung der Zahnstange ein. Das Lenkritzel wiederum ist mit einer Lenksäule und einem Lenkrad zum betätigen der Lenkung verbunden.

Der Verzahnungseingriff zwischen dem Ritzel und der Zahnstange soll spielfrei sein, insbesondere weil bei Geradeausfahrt oder Umkehr der Lastrichtung im Verzahnungseingriff ansonsten Geräusche entstehen. Auch für das Fahrverhalten eines Kraftfahrzeugs ist Lenkungsspiel nachteilig.

Aus dem Stand der Technik sind zahlreiche Zahnstangenlenkungen bekannt. Das deutsche Gebrauchsmuster DE 1886801 U zeigt beispielsweise eine nicht servounterstützte Zahnstangenlenkung mit einem rohrförmigen Lenkungsgehäuse und einem Ritzel in der oben beschriebenen Anordnung. Ein Druckstück ist auf der der Verzahnung gegenüberliegenden Seite der Zahnstange angeordnet und drängt unter Federvorspannung die Zahnstange in den Eingriff mit dem Ritzel. Dieses Druckstück mit seinen weiteren Komponenten ist in der Fertigung und der Montage aufwändig, Es ist ein separater Stutzen an dem Lenkungsgehäuse erforderlich. Das Druckstück muss mit einer Feder und einer Einstellschraube sowie einer Kontermutter zur Festlegung der Einstellschraube versehen sein. Es muss in der Form sehr genau der Zahnstange und dem Stutzen angepasst sein. Weiter muss das Druckstück geschmiert und eingestellt werden. Dies ist ein erheblicher Aufwand, der auch zu den Kosten einer solchen Lenkung beiträgt. Dennoch werden nahezu alle Zahnstangenlenkungen derzeit mit einem Druckstück versehen.

Eine andere technische Lösung ist aus der deutschen Auslegeschrift DE 1230684 A bekannt. Dort ist die Zahnstange beidseitig in Gleitlagern in dem Lenkungsgehäuse gelagert. Ihre Position in Radialrichtung in dem Lenkungsgehäuse ist genau festgelegt. Zur Herstellung eines spielfreien Eingriffs ist das Lenkritzel an seinem der Lenksäule zugewandten Ende in einem schwenkbaren Lager gelagert. Das freie Ende des Ritzels ist in einem Lager angeordnet, dessen Position einstellbar ist. Das Lager selbst ist in einer Richtung senkrecht zu der Zahnstange verschieblich. Die Zahnstangenlagerung selbst ist in diesem Fall vereinfacht. Die Lagerung des Ritzels ist aber sehr aufwendig und dadurch kostenintensiv. Diese Lenkung hat sich in der Praxis nicht durchsetzen können.

Die US-A-2007/0137375 offenbart ein Zahnstangenlenkgetriebe, wobei die Zahnstange in exzentrischen Lagern gelagert ist.

Es ist Aufgabe der vorliegenden Erfindung, eine Zahnstangenlenkung dahingehend zu verbessern, dass ein spielfreier Eingriff zwischen dem Ritzel und der Zahnstange mit einfachen und kostengünstigen Mitteln erzielt werden kann. Insbesondere ist es Aufgabe der vorliegenden Erfindung, die Anzahl der Bauteile in einer Zahnstangenlenkung zu minimieren.

Diese Aufgabe wird von einem Lenkgetriebe mit den Merkmalen des Anspruchs 1 gelöst.

Weil bei einem Zahnstangenlenkgetriebe mit einem Lenkungsgehäuse, das rohrförmig ausgebildet ist und das eine Gehäuseachse aufweist, wobei in dem Lenkungsgehäuse eine Zahnstange in Richtung einer Längsachse verschieblich in Lagern gelagert ist, und mit einem Lenkritzel, das in einem Ritzelgehäuse um eine Achse drehbar gelagert ist und das eine Ritzelverzahnung aufweist, die mit einer Verzahnung der Zahnstange in Eingriff steht, zumindest ein Lager als exzentrisches Gleitlager ausgebildet ist, welches gegenüber dem Lenkungsgehäuse drehbar ist, so dass die Zahnstange in Richtung auf das Lenkritzel zustellbar ist, kann die Zahnstange während der Montage des Lenkgetriebes durch Drehung des Lagers auf das Ritzel zugestellt werden, so dass das Spiel in diesem Verzahnungseingriff einstellbar ist. Weil weiter das Lenkungsgehäuse an der dem Ritzelgehäuse abgewandten Seite gegenüber dem Verzahnungseingriff eine Einprägung aufweist, die bis nahe an die Zahnstange reicht, ist der Eingriff des Ritzel in die Zahnstange gesichert, auch wenn die Zahnstange einer großen radialen Last ausgesetzt wird, die die Last im Normalbetrieb weit übersteigt.

Die Einstellung ist besonders einfach möglich, wenn das Lager um die Achse drehbar ist und dadurch die Lage der Längsachse relativ zu der Drehachse einstellbar ist.

Vorzugsweise sind beide Gleitlager der Zahnstange exzentrisch ausgebildet.

Das wenigstens eine Gleitlager greift mit einem äußeren Kragen außen über das Lenkungsgehäuse, und die freie Stirnseite des Lenkungsgehäuses bildet einen Anschlag für das Lager in der Montagerichtung.

Der das Lenkungsgehäuse übergreifende Kragen kann als Sitz eines Faltenbalgs genutzt werden, der dem Spurstangenanschluss umgibt und gegen Witterungseinflüsse schützt. Das exzentrische Gleitlager weist vorzugsweise einen mit der Zahnstange in Anlage kommenden Gleitring aus metallischem Material auf, insbesondere aus Stahl. Zwischen dem äußeren kappenartigen Träger und dem Gleitring ist vorzugsweise ein Elastomer angeordnet, das Dämpfungseigenschaften des Gleitlagers bewirkt. Wenn zwischen dem Elastomer und dem äußeren Befestigungsring, beispielsweise in Form des kappenartigen Trägers, ein dünnwandiger, elastischer Bereich ausgebildet ist, kann das exzentrische Lager zugleich die Aufgabe einer Anschlagdämpfung für die Zahnstange in ihren Endlagen übernehmen. Dadurch werden weitere Bauteile eingespart. Dies gilt insbesondere, wenn die Lagerbuchse über den Außenring in Axialrichtung nach außen übersteht.

Eine einfache Dämpfung ist erzielbar, wenn die Lagerbuchse und der Lageraußenring mit einem dazwischen angeordneten Elastomer stoffschlüssig und einteilig miteinander verbunden sind. Die Einteiligkeit vereinfacht außerdem die Handhabung bei der Montage.

Vorzugsweise ist zumindest die innere Lagerbuchse aus Stahl gefertigt ist.

Eine besonders Platz sparende Ausführung ergibt sich, wenn das Lenkungsgehäuse und das Ritzelgehäuse aus Stahlrohr gefertigt und miteinander verschweißt sind. Diese Ausführung hat insbesondere gegenüber konventionellen Gehäusen aus Leichtmetallguss auch einen Kostenvorteil.

Wenn das Lenkungsgehäuse im Bereich der Einprägung eine reibungsmindernde Oberfläche aufweist, die an der Zahnstange anliegt, kann das Spiel dort zu Null gemacht werden. Wenn weiter das Lenkungsgehäuse im Bereich der Einprägung eine Oberflächengestaltung mit wenigstens einer Erhebung kleiner Abmessung nach Art von Rippen oder Buckeln aufweist, wobei wenigstens eine die Erhebungen an der Zahnstange anliegt, wird die zur Verlagerung der Zahnstange im Betrieb erforderliche Durchschiebekraft verringert.

Wenn das Lenkgetriebe kein Druckstück aufweist, kann der dafür ansonsten erforderliche Gehäusestutzen entfallen.

Die Lenkung wird insbesondere vereinfacht, wenn die Zahnstange frei von Krafteinleitungspunkten wie zum Beispiel einem Hydraulikmotor oder einer Verzahnung für einen elektromotorischen, die Zahnstange unmittelbar antreibenden Lenkhilfsantrieb ist.

Nachfolgend wird die vorliegende Erfindung anhand der Zeichnung näher beschrieben. Es zeigen:
- Fig. 1:: ein erfindungsgemäßes Lenkgetriebe in einer Draufsicht;
- Fig. 2:: das Lenkgetriebe aus Fig. 1 in einem Längsschnitt entlang der Linie II-II;
- Fig. 3:: das Lenkgetriebe aus Fig. 1 und Fig. 2 in einer Ansicht in Richtung der Längsachse der Zahnstange;
- Fig. 4:: ein exzentrisches Lager in einer perspektivischen Ansicht von der Außenseite her; sowie
- Fig. 5:: das Lager aus Fig. 4 in einer perspektivischen Ansicht auf die Innenseite.

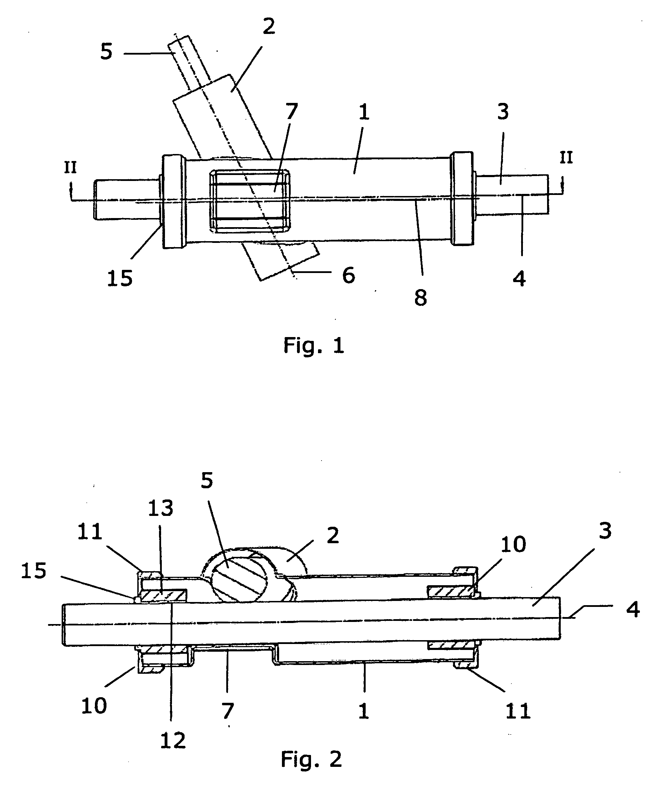

In der Fig. 1 ist ein erfindungsgemäßes Lenkgetriebe mit einem Lenkungsgehäuse 1 und einem daran angesetzten Ritzelgehäuse 2 in einer Draufsicht dargestellt. Das Lenkungsgehäuse 1 lagert eine Zahnstange 3, die in Richtung einer Längsachse 4 längsverschieblich ist. Ein Lenkritzel 5 ist um eine Längsachse 6 drehbar in dem Ritzelgehäuse 2 gelagert. Die Lagerung des Ritzels 5 in dem Ritzelgehäuse 2 ist so ausgebildet, dass die Drehachse 6 bezüglich des Ritzelgehäuses 2 fixiert ist.

Das Lenkritzel 5 kämmt mit einer entsprechenden Verzahnung der Zahnstange 3. Der Eingriffsbereich liegt im Bereich des Schnittpunkts der Achsen 4 und 6. Gegenüber dem Eingriff der Verzahnung ist das Lenkungsgehäuse 1 mit einer Einprägung 7 versehen, die bis in die Nähe der Zahnstange 3 vertieft ist.

Die Fig. 2 zeigt einen Längsschnitt durch das Lenkungsgetriebe aus Fig. 1 entlang der Linie II-II. Gleiche Bauteile tragen gleiche Bezugsziffern.

Das Lenkungsgehäuse 1 weist an den beiden freien Enden, die von der Zahnstange 3 durchsetzt werden, jeweils ein Lager 10 auf. Das Lager 10 ist, als Gleitlager ausgebildet und stützt die Zahnstange 3 in Radialrichtung bezüglich der Achse 4 ab. Das Lager 10 ist jeweils mit einem ringförmigen Kragen 11 ausgebildet, wobei der Kragen 11 die Stirnseiten des Lenkungsgehäuses 1 außen übergreift.

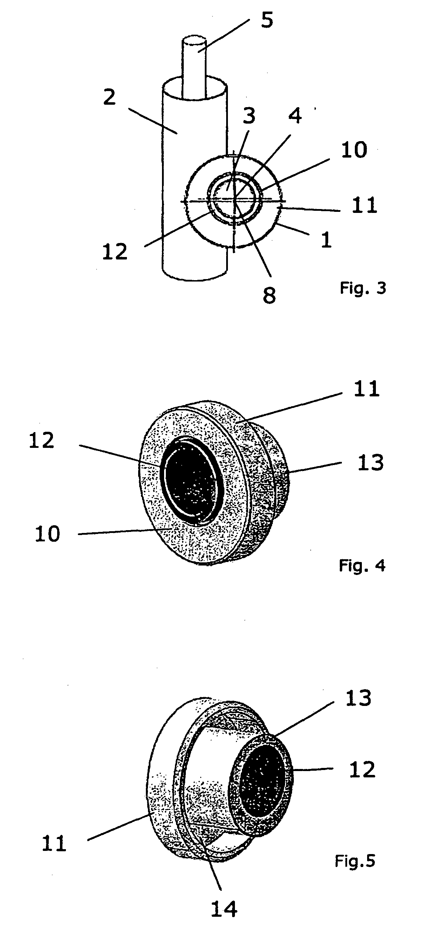

Die Fig. 3 zeigt das Lenkungsgetriebe aus Fig. 1 und Fig. 2 in einer Ansicht in Richtung der Achse 4 der Zahnstage 3. In dieser Darstellung ist erkennbar, dass die Zahnstange 3 außermittig in dem Lenkungsgehäuse 1 gelagert ist. Die Längsachse 4 der Zahnstange 3 ist von der Längsachse 8 des Lenkungsgehäuses 1 geringfügig beabstandet. Dieser Abstand wird von dem Lager 10 bewirkt, dessen Lagerring 12 exzentrische zudem Kragen 11 angeordnet ist.

Die Fig. 4 zeigt das Lager 10 in einer perspektivischen Darstellung mit Druafsicht auf die in den Fig. 1 und 2 außen liegende Seite. Das Lager 10 weist den äußeren Kragen 11 und die Lagerbuchse 12 auf. Der Kragen 11 und die Buchse 12 sind bevorzugt aus Stahl gefertigt. Zwischen dem Kragen 11 und der Lagerbuchse 12 ist stoffschlüssig ein Bereich aus einem Elastomer 13 vorgesehen.

In der Fig. 5 ist schließlich das Lager 10 aus einer anderen Perspektive dargestellt. Es ist die dem Innenraum des Lenkungsgehäuses 1 zugewandte Seite dargestellt.

Wie die Fig. 5 zeigt, ist der Außenring 11 des Lagers 10 mit einer Wandstärke versehen, die im Bereich von einigen Millimetern liegt. Dies bewirkt, dass der Außenring 11 bei der Montage entsprechend über die Oberfläche des Lenkungsgehäuses 1 hinaussteht. Bei der kompletten Lenkung ist es vorgesehen, das Lenkungsgehäuse nach außen mit an sich bekannten Faltenbälgen zu kapseln, die die freien Enden der Zahnstange 3 und daran angeschlossene Spurstangen gegen Umwelteinflüsse kapseln. Aufgrund der Dicke der Außenwände 11 kann ein entsprechender Faltenbalg über das Lager 10 geführt werden, so dass er rastend hinter dem Außenring 11 greift. In dieser Position kann der Faltenbalg dann beispielsweise mit einem Kabelbinder oder einer Schelle gesichert werden.

Die Fig. 5 zeigt weiter, dass die Lagerbuchse 12 exzentrisch in dem Elastomer 13 eingebettet ist. Zwischen dem Elastomer 13 und dem Außenring 11 liegt ein dünnwandiger Bereich 14.

Das Lager 10 kann beispielsweise derart gefertigt werden, dass der Außenring 11 und die Lagerbuchse 12 aus Metall gefertigt werden. Sie werden dann in an sich bekannter Weise mit dem Elastomer 13 umspritzt. Das so entstandene Verbundbauteil wird als ein einzelnes Bauelement bei der Fertigung einer erfindungsgemäßen Lenkung eingesetzt und vereinfacht auf diese Weise die Handhabung.

Bei der Montage wird eine Vorrichtung verwendet, in der die Lager 10 gehalten sind. Die Zahnstange 3 wird in das Gehäuse 1 geführt und das Ritzel 5 wird in entsprechenden Lagern in dem Ritzelgehäuse 2 montiert. Dann werden die beiden Lager 10 auf die freien Stirnseiten des Lenkungsgehäuses 1 aufgesetzt und mittels der Vorrichtung vorzugsweise synchron um die Längsachse 8, die mit dem Mittelpunkt der Außenringe 11 zusammenfällt, gedreht. Dieser Vorgang wird so durchgeführt, dass der Eingriff zwischen dem Ritzel 5 und der Zahnstange 3 spielfrei ist. Eine dabei auftretende radiale Last auf die Lagerbuchsen 12 bewirkt eine elastische Verformung des Elastomers 13 und dadurch eine elastische Vorspannung der Zahnstange 3 gegen das Ritzel 5. In dieser Position werden dann die Lager 10 an dem Lenkungsgehäuse 1 fixiert. Damit ist das Lenkgetriebe dauerhaft spielfrei eingestellt.

Es werden nun die nicht dargestellten Spurstangenköpfe und Spurstangen an die freien Enden der Zahnstange 3 angeschlossen. Faltenbälge werden über die Spurstangen und die Außenringe 11 der Lager 10 geführt, bis diese hinter den Außenringen 11 verrasten. Eine zusätzliche Fixierung der Faltenbälge kann über je eine Schelle oder je einen Kabelbinder erfolgen.

Die Lagerbuchse 12 kann über die Stirnseite des Lagers 11 hinaus nach außen überstehen. Dies ist in der Fig. 1 und in der Fig. 2 als Überstand 15 veranschaulicht. In den Endlagen der Zahnstange 3 können die nicht dargestellten Spurstangenköpfe an den Überstand 15 anschlagen. Die Lagerbuchsen 12 werden dann in Axialrichtung gegen das Elastomer 13 gedrängt. Das Elastomer 13 verformt sich dabei elastisch. Ein metallischer Kontakt zwischen dem Spurstangenkopf und dem Lenkungsgehäuse 1 erfolgt nicht. Die Lagerbuchse 12 wirkt bei diesem Vorgang als Anschlagdämpfer. Das Lager 10 erfüllt in dieser Ausführungsform also insgesamt drei Funktionen, nämlich einmal die Lagerung der Zahnstange 3 gegenüber dem Lenkungsgehäuse 1, die Zustellung der Zahnstange 3 gegen das Ritzel 5 und die elastische Vorspannung des Eingriffs, sowie den Anschlagpuffer für die Endlagendämpfung der Zahnstange 3.

Das insoweit beschriebene Lenkgetriebe ist insbesondere vorteilhaft für relativ kleine und leichte PKW, bei denen keine Servounterstützung im Lenkgetriebe selbst auf die Zahnstange wirkt. Solche Lenkungen werden entweder vollkommen ohne Servounterstützung eingesetzt oder die Servounterstützung greift an der Lenkwelle im Kraftfluss oberhalb des Ritzels 5, also außerhalb des eigentlichen Lenkgetriebes an. Das Lenkgetriebe ist dementsprechend sehr einfach aus wenigen Bauteilen aufgebaut und folglich leicht und preiswert. Ein Druckstück mit allen dazugehörigen Komponenten sowie die üblicherweise vorgesehenen Anschlagdämpfer können entfallen.

## Patentansprüche

1. Zahnstangenlenkgetriebe mit einem Lenkungsgehäuse (1), das rohrförmig ausgebildet ist und das eine Gehäuseachse (8) aufweist, wobei in dem Lenkungsgehäuse (1) eine Zahnstange (3) in Richtung einer Längsachse (4) verschieblich in Lagern (10) gelagert ist, und mit einem Lenkritzel (5), das in einem Ritzelgehäuse (2) um eine Achse (6) drehbar gelagert ist und das eine Ritzelverzahnung aufweist, die mit einer Verzahnung der Zahnstange (3) in Eingriff steht, wobei zumindest eines der Zahnstangenlager (10) als exzentrisches Gleitlager ausgebildet ist, welches gegenüber dem Lenkungsgehäuse (1) drehbar ist, so dass die Zahnstange (3) in Richtung auf das Lenkritzel (5) zustellbar ist, wobei das wenigstens eine Lager (10) einen Lageraußenring (11) und eine innere Lagerbuchse (12) aufweist, die exzentrisch zueinander angeordnet sind, **dadurch gekennzeichnet, dass** das wenigstens eine Lager (10) mit seinem Außenring (11) einen äußeren Kragen bildet, der außen über das Lenkungsgehäuse (1) greift.

2. Zahnstangenlenkgetriebe nach Anspruch 1, **dadurch gekennzeichnet, dass** zumindest die Lagerbuchse (12) aus Stahl gefertigt ist.

3. Zahnstangenlenkgetriebe nach einem der vorhergehenden Ansprüche, **dadurch gekennzeichnet, dass** der Lageraußenring (11) und die Lagerbuchse (12) mit einem dazwischen angeordneten Elastomer (13) stoffschlüssig und einteilig miteinander verbunden sind.

4. Zahnstangenlenkgetriebe nach einem der vorhergehenden Ansprüche, **dadurch gekennzeichnet, dass** die Lagerbuchse (12) in Richtung der Längsachse (4) nach außen über den Lageraußenring (11) hinaussteht, so dass ein Anschlag für ein Spurstangengelenk gebildet ist.

5. Zahnstangenlenkgetriebe nach einem der vorhergehenden Ansprüche, **dadurch gekennzeichnet, dass** das Lenkungsgehäuse (1) und das Ritzelgehäuse (2) aus Stahlrohr gefertigt und miteinander verschweißt sind, und dass das Lenkungsgehäuse (1) an der dem Ritzelgehäuse (2) abgewandten Seite gegenüber dem Verzahnungseingriff eine Einprägung (7) aufweist, die bis nahe an die Zahnstange (3) reicht oder diese berührt.

6. Zahnstangenlenkgetriebe nach einem der vorhergehenden Ansprüche, **dadurch gekennzeichnet, dass** das Lenkungsgehäuse (1) im Bereich der Einprägung (7) eine reibungsmindernde Oberfläche aufweist, die an der Zahnstange (3) anliegt.

7. Zahnstangenlenkgetriebe nach einem der vorhergehenden Ansprüche, **dadurch gekennzeichnet, dass** das Lenkungsgehäuse (1) im Bereich der Einprägung (7) eine Oberflächengestaltung mit wenigstens einer Erhebung kleiner Abmessung aufweist, wobei wenigstens eine die Erhebungen an der Zahnstange (3) anliegt.

8. Zahnstangenlenkgetriebe nach einem der vorhergehenden Ansprüche, **dadurch gekennzeichnet, dass** das Lager (10) um die Achse (8) drehbar ist und dadurch die Lage der Längsachse (4) relativ zu der Drehachse (6) einstellbar ist.

9. Zahnstangenlenkgetriebe nach einem der vorhergehenden Ansprüche, **dadurch gekennzeichnet, dass** an zwei gegenüber liegenden Enden des Lenkungsgehäuses je ein exzentrisches Lager (10) vorgesehen ist.

10. Zahnstangenlenkgetriebe nach einem der vorhergehenden Ansprüche, **dadurch gekennzeichnet, dass** kein Druckstück vorgesehen ist.

11. Zahnstangenlenkgetriebe nach einem der vorhergehenden Ansprüche, **dadurch gekennzeichnet, dass** die Zahnstange (3) frei von Krafteinleitungspunkten für einen Lenkhilfsantrieb ist.

## Claims

1. Rack-and-pinion steering gear with a steering housing (1), which is tubular and has a housing axis (8), wherein in the steering housing (1) a rack (3) is mounted in bearings (10) displaceably towards a longitudinal axis (4), and with a steering pinion (5), which is mounted in a pinion housing (2) rotatably about an axis (6) and has a pinion gearing, which engages with a gearing of the rack (3), wherein at least one of the rack bearings is formed as an eccentric sliding bearing, which can rotate relative to the steering housing (1), so that the rack (3) can be adjusted in the direction of the steering pinion (5), wherein the at least one bearing (10) has an outer bearing race (11) and an internal bearing bush (12), which are arranged eccentrically to one another, **characterised in that** the at least one bearing (10), having an outer race (10) forms an outer collar, which extends outwards over the steering housing.

2. The rack-and-pinion steering gear according to claim 1, **characterised in that** at least the internal bearing bush (12) is produced from steel.

3. The rack-and-pinion steering gear according to any one of the above claims, **characterised in that** the outer bearing race (11) and the internal bearing bush (12) are connected to one another in a firmly-bonded and integral manner, with an elastomer (13) arranged between them.

4. The rack-and-pinion steering gear according to any one of the above claims, **characterised in that** the internal bearing bush (12) projects towards the longitudinal axis (4) outwards over the outer bearing race (11), so that a stop for a track rod joint is formed.

5. The rack-and-pinion steering gear according to any one of the above claims, **characterised in that** the steering housing (1) and the pinion housing (2) are produced from steel tube and welded together, and **in that** the steering housing (1) on the side facing away from the pinion housing (2), has opposite the gearing engagement a groove (7), which reaches down near to the rack (3) or touches this.

6. The rack-and-pinion steering gear according to any one of the above claims, **characterised in that** the steering housing (1) in the region of the groove (7) has a friction-reducing surface, which rests on the rack (3).

7. The rack-and-pinion steering gear according to any one of the above claims, **characterised in that** the steering housing (1) in the region of the groove (7) has a surface formation with at least one small-sized elevation, wherein at least one of the elevations rests on the rack (3).

8. The rack-and-pinion steering gear according to any one of the above claims, **characterised in that** the bearing (10) can be rotated about the axis (8) and as a result the position of the longitudinal axis (4) can be adjusted relative to the axis of rotation (6).

9. The rack-and-pinion steering gear according to any one of the above claims, **characterised in that** an eccentric bearing (10) is provided at two opposite-lying ends of the steering housing in each case.

10. The rack-and-pinion steering gear according to any one of the above claims, **characterised in that** no thrust piece is provided.

11. The rack-and-pinion steering gear according to any one of the above claims, **characterised in that** the rack (3) is free from force application points for a steering accessory drive.

## Revendications

1. Direction à crémaillère avec un boîtier de direction (1) qui est réalisé de sorte à avoir une forme tubulaire et qui présente un axe de boîtier (8), auquel cas une crémaillère (3) est logée, au niveau du boîtier de direction (1), dans des paliers (10) de manière à pouvoir se déplacer en direction d'un axe longitudinal (4), et avec un pignon de direction (5) qui est logé rotatif autour d'un axe (6) dans un boîtier de pignon (2) et qui présente une denture de pignon(3) qui est en prise avec une denture de la crémaillère (3), auquel cas au moins un des paliers de crémaillère est formé en tant que palier lisse excentrique, lequel est susceptible de tourner par rapport au boîtier de direction (1) de sorte que la crémaillère (3) puisse être amenée en direction du pignon de direction (5), auquel cas le au moins un palier (10) présente une bague extérieure de palier (11) et un coussinet intérieur (12) qui sont agencés excentriquement l'une par rapport à l'autre, **caractérisée en ce que** le au moins un palier (10) forme, avec sa bague extérieure (11), une collerette extérieure qui vient en prise à l'extérieur avec le boîtier de direction (1).

2. Direction à crémaillère selon la revendication 1, **caractérisée en ce qu'**au moins le coussinet (12) est réalisé en acier.

3. Direction à crémaillère selon une des revendications précédentes, **caractérisée en ce que** la bague extérieure de palier (11) et le coussinet (12) sont reliés l'une à l'autre, par liaison de matière et de sorte à former une seule pièce, à l'aide d'un élastomère (13) y étant agencé intercalé.

4. Direction à crémaillère selon une des revendications précédentes, **caractérisée en ce que** le coussinet (12) fait saillie vers l'extérieur au-dessus de la bague extérieure de palier (11) en direction de l'axe longitudinal (4), de sorte à former une butée destinée à une articulation de la barre d'accouplement.

5. Direction à crémaillère selon une des revendications précédentes, **caractérisée en ce que** le boîtier de direction (1) et le boîtier de pignon (2) sont réalisés à partir d'un tube en acier et sont soudés l'un à l'autre et que le boîtier de direction (1) présente une empreinte (7) sur le côté opposé du boîtier de pignon (2) vis-à-vis de l'engrènement denté, cette empreinte s'étendant proche de la crémaillère (3) ou étant en contact avec elle.

6. Direction à crémaillère selon une des revendications précédentes, **caractérisée en ce que** le boîtier de direction (1) présente, dans la zone de l'empreinte (7), une surface réduisant le frottement qui repose sur la crémaillère (3).

7. Direction à crémaillère selon une des revendications précédentes, **caractérisée en ce que** le boîtier de direction (1) présente, dans la zone de l'empreinte (7), une finition de surface avec au moins élévation de dimension réduite, auquel cas au moins une des élévations repose sur la crémaillère (3).

8. Direction à crémaillère selon une des revendications précédentes, **caractérisée en ce que** le palier (10) est rotatif autour de l'axe (8) et par conséquent le positionnement de l'axe longitudinal (4) par rapport à l'axe de rotation (6) est réglable.

9. Direction à crémaillère selon une des revendications précédentes, **caractérisée en ce que** l'on prévoit un palier excentrique (10) au niveau de chacune des deux extrémités opposées du boîtier de direction.

10. Direction à crémaillère selon une des revendications précédentes, **caractérisée en ce que** l'on ne prévoit aucun élément de pression.

11. Direction à crémaillère selon une des revendications précédentes, **caractérisée en ce que** la crémaillère (3) est exempte de points d'application de force pour un entraînement de direction assistée.
